# FASCICULE DE BREVET EUROPEEN

(11) **EP 0 688 073 B1**
(45) Date de publication et mention de la délivrance du brevet: **15.10.1997**
(21) Numéro de dépôt: 95401169.8
(22) Date de dépôt: 19.05.1995
(51) Int. Cl.: H02G 3/06

(54) **Canalisation de distribution électrique**
Elektrische Kabelrinne
Electrical distribution channel

(30) Priorité: 15.06.1994 FR 9407416
(43) Date de publication de la demande: 20.12.1995
(73) Titulaire: SCHNEIDER ELECTRIC SA, 92100 Boulogne Billancourt (FR)
(72) Inventeur: Teinturier, Jean-Yves, F-21600 Longvic (FR); Audiffret, Patrick, F-21000 Dijon (FR); Thierry, Jean-Pierre, F-21560 Arc-sur-Tille (FR)
(74) Mandataire: Saint Martin, René

(56) Documents cités:
- FR-A- 1 533 676
- US-A- 4 349 220

## Description

La présente invention concerne une canalisation de distribution électrique comprenant une enveloppe métallique, à parois supérieure, inférieure et latérales, formée de plusieurs tronçons longitudinaux assemblés entre eux selon un plan de joint grâce à des moyens d'éclissage mécanique, et logeant des conducteurs électriques reliés entre eux par des moyens d'éclissage électrique. L'enveloppe de la canalisation présente un canal longitudinal sur sa paroi supérieure.

Les conducteurs électriques tels que des barres ou des câbles sont connectés entre eux aux extrémités des tronçons grâce à des blocs de connexion logés dans une ouverture de l'enveloppe; pour protéger les conducteurs électriques et les blocs de connexion contre les courts-circuits dus à l'introduction d'eau ou d'un liquide quelconque dans la zone d'éclissage de deux tronçons aboutés, par leur plan de joint ou par l'ouverture précitée, il est donc nécessaire de prendre des dispositions d'éclissage et de serrage étanche entre les deux tronçons. Les moyens d'éclissage habituellement utilisés sont constitués par deux flasques appliqués contre les parois latérales de l'enveloppe, mais ce type de moyens ne rend pas la canalisation suffisamment étanche. Un exemple de cet état de la technique est décrit par le brevet d'invention FR-A-1 533 676.

L'invention remédie à l'inconvénient précité en améliorant de manière simple l'étanchéité des zones d'éclissage d'une canalisation du type décrit.

La canalisation est caractérisée en ce qu'elle comprend une pièce d'étanchéité disposée aux extrémités des tronçons sur la paroi supérieure de l'enveloppe, transversalement au canal longitudinal, et qui présente un nez d'arrêt reposant dans le canal longitudinal et un conduit transversal d'évacuation d'eau pouvant communiquer avec le canal longitudinal. Dans le cadre de la description, l'eau désignera tout liquide obtenu par écoulement ou condensation.

Le nez d'arrêt présente avantageusement une ouverture débouchant dans le canal longitudinal de l'enveloppe, et le conduit transversal communique avec l'ouverture via au moins un conduit longitudinal.

Les moyens d'éclissage mécanique consistent de préférence en deux demi-coquilles présentant chacune une âme et un bandeau supérieur, destinés respectivement à s'appliquer par leur face interne contre les parois latérales à l'aide de moyens de serrage transversal, à s'appliquer sous la paroi inférieure et à surmonter la paroi supérieure de l'enveloppe, les bandeaux supérieurs des deux demi-coquilles étant appliqués l'un contre l'autre à l'aide de moyens longitudinaux d'étanchéité. Le bandeau supérieur de chaque demi-coquille comprend avantageusement des rabats latéraux recouvrant la pièce d'étanchéité. L'âme de chaque demi-coquille comprend aussi avantageusement des gorges verticales dont l'extrémité supérieure est située au voisinage du conduit transversal de la pièce d'étanchéité, et des joints verticaux d'étanchéité disposés au bord des gorges assurant une étanchéité latérale de part et d'autre de l'ouverture de l'enveloppe. En outre chaque demi-coquille comprend un bandeau inférieur destiné à s'appliquer sous la paroi inférieure de l'enveloppe et, dans l'âme et au-dessus du bandeau inférieur, une gorge horizontale communiquant avec les gorges verticales précitées.

Enfin la pièce d'étanchéité comprend une lèvre d'étanchéité inférieure solidaire du nez d'arrêt et applicable sur la paroi supérieure de l'enveloppe, et une lèvre d'étanchéité supérieure solidaire d'une paroi transversale adjacente au conduit transversal et destinée à s'appliquer sous la face interne du bandeau supérieur et/ou contre la face interne de l'âme des demi-coquilles.

La description faite ci-après en regard des dessins fera ressortir les caractéristiques et avantages de l'invention.

Aux dessins annexés:
- la figure 1 est une vue de profil d'une canalisation à éclissage étanche;
- la figure 2 est une vue en coupe de la figure 1 selon le plan PP';
- la figure 3 est une vue partagée d'une coupe D-D et d'une coupe C-C de la figure 2;
- la figure 4 est une vue agrandie d'un détail de la figure 2;
- la figure 5 est une vue en perspective de la pièce d'étanchéité;
- la figure 6 est une vue en perspective d'une pièce d'étanchéité.

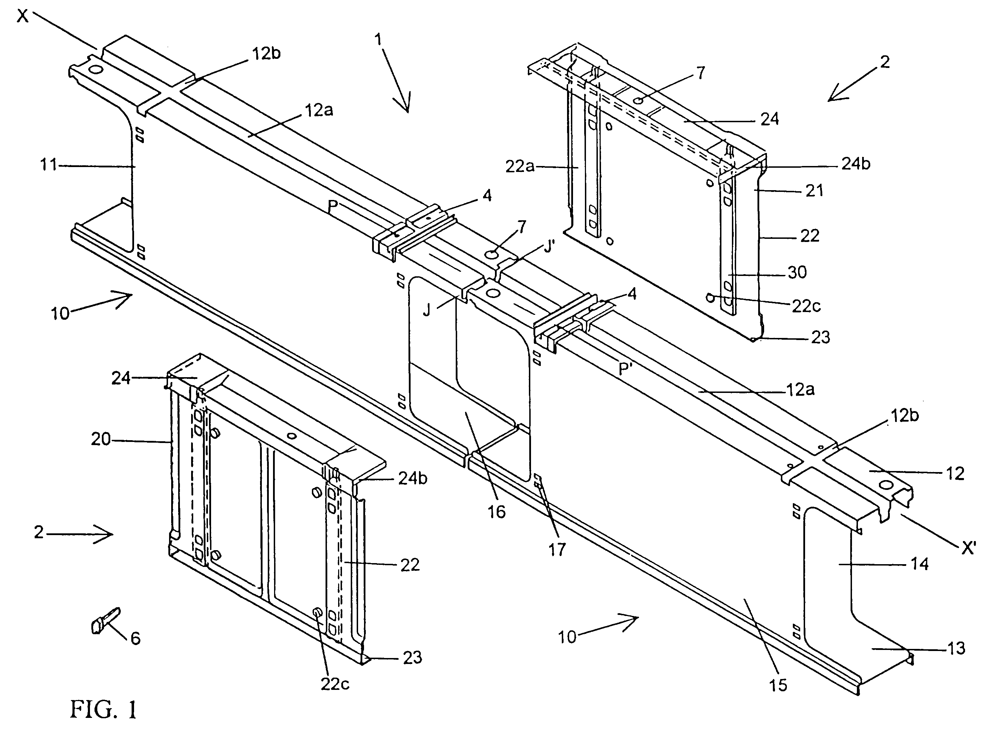

La canalisation électrique préfabriquée 1 représentée sur la figure 1 comprend un certain nombre de tronçons 10 de même longueur assemblés bout à bout. Seuls deux tronçons sont ici représentés dans le souci de simplifier. La canalisation comprend une enveloppe métallique 11 en tôle pliée, à quatre parois supérieure 12, inférieure 13, latérales 14 et 15, pouvant loger plusieurs conducteurs électriques tels que des barres ou des câbles non représentés sur la figure.

Les parois latérales 14 et 15 présentent, au niveau du plan de joint JJ' de deux tronçons assemblés, une ouverture 16 apte à loger des moyens d'éclissage électrique tels qu'un bloc de connexion, non représenté, reliant les conducteurs électriques de deux tronçons entre eux. La paroi supérieure 12 présente un canal longitudinal 12a suivant l'axe longitudinal XX' de la canalisation, et des canaux transversaux 12b situés de part et d'autre du plan de joint JJ' et en-deça des extrémités de l'ouverture 16 et destinés à recevoir une pièce d'étanchéité 4.

Les tronçons 10 sont assemblés grâce à des moyens d'éclissage mécanique 2 qui obturent les ouvertures 16; ces moyens d'éclissage consistent en deux demi-coquilles 20 et 21 en tôle pliée qui présentent chacune une âme 22, un bandeau inférieur 23, et un bandeau supérieur 24.

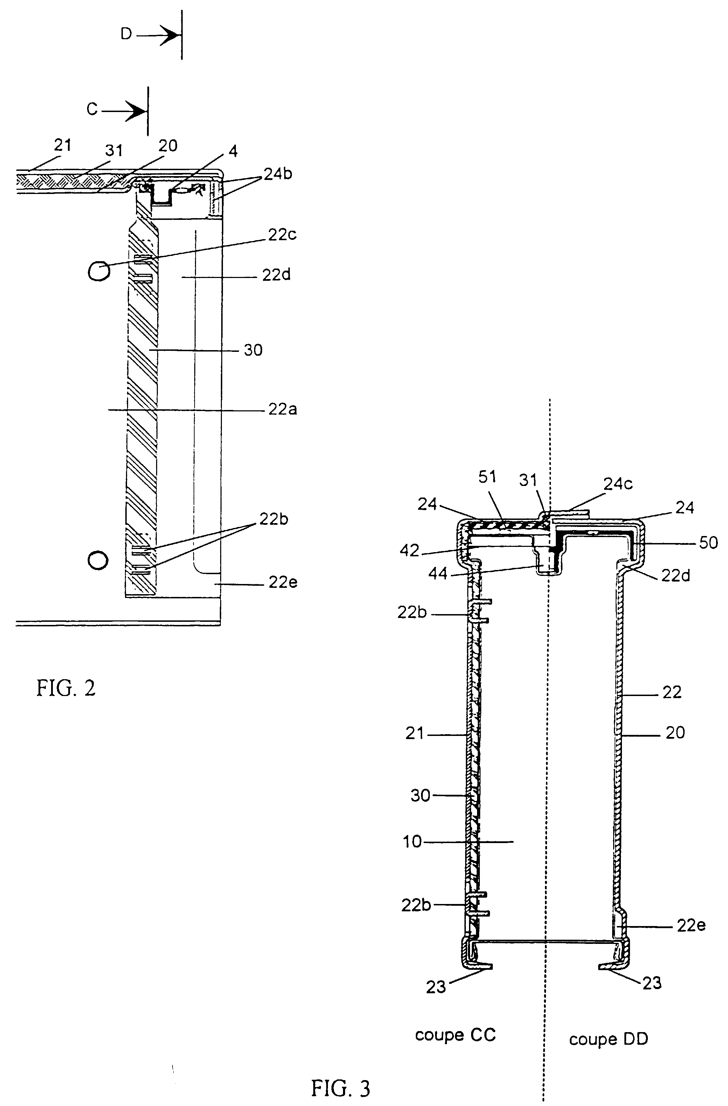

L'âme 22 comprend une face interne 22a destinée à s'appliquer sur la paroi latérale 14 ou 15 de la canalisation; cette face est munie d'ergots de positionnement 22b (voir figure 2) qui peuvent s'engager dans des orifices appropriés 17 des parois latérales, et de trous de fixation 22c où peuvent s'introduire des moyens de serrage transversal 6 tels que des boulons. La face interne présente aussi, à ses extrémités latérales, une gorge verticale 22d se raccordant perpendiculairement à son extrémité inférieure à une gorge horizontale 22e dirigée vers l'extérieur de l'âme. La gorge 22d est bordée par un joint vertical 30, assurant une étanchéité latérale de part et d'autre de l'ouverture 16, lorsque les deux demi-coquilles sont fixées à la canalisation.

Le bandeau inférieur 23 est destiné à s'appliquer sous la paroi inférieure 13 de l'enveloppe. Le bandeau supérieur 24 présente une face interne 24a destinée à surmonter la paroi supérieure 12 de la canalisation et comprend des rabats latéraux 24b. Le bandeau supérieur 24 de la demi-coquille 21 présente une rampe 24c qui, lorsque les demi-coquilles sont fixées à la canalisation, surmonte le bandeau supérieur de la demi-coquille 20, et est inclinée de façon que l'eau puisse s'éloigner de la zone de joint des deux bandeaux. L'étanchéité de cette zone, est assurée par des moyens longitudinaux d'étanchéité 31 qui consistent de préférence en un joint longitudinal disposé sur toute la longueur de la face interne du bandeau de la demi-coquille 21 au début de la rampe 24c.

La pièce d'étanchéité 4 est réalisée par moulage et présente une forme adaptée à s'emboîter dans le canal longitudinal 12a et les canaux transversaux 12b de la canalisation; elle est munie de trous de fixation 40 permettant de la riveter à la paroi supérieure 12 de l'enveloppe.

La pièce comprend un nez d'arrêt 41 et un conduit transversal 42 d'évacuation d'eau. Le nez 41 s'appuie en son milieu sur le fond du canal longitudinal 12a de l'enveloppe et ses ailes 41a s'appliquent sur la paroi supérieure 12; il présente une ouverture 41b débouchant dans le canal longitudinal 12a de l'enveloppe. Le conduit transversal 42 d'évacuation d'eau est délimité par une paroi tranversale 43 qui se situe du côté du plan de joint JJ'.

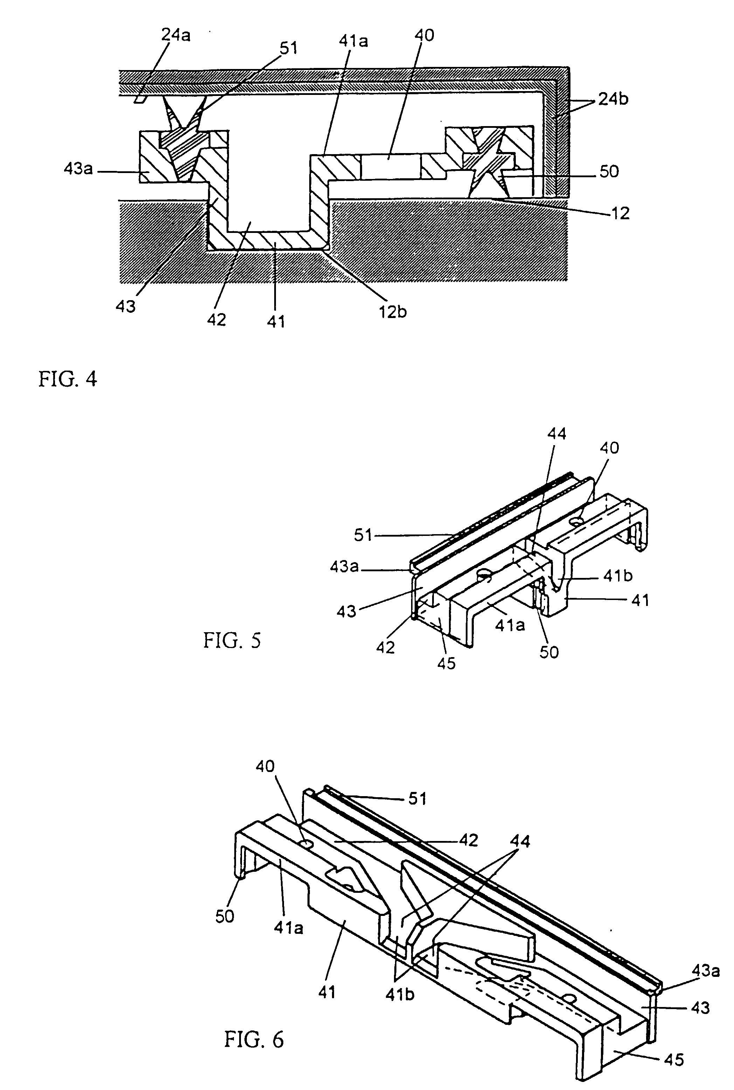

La pièce 4 comprend en outre un conduit longitudinal 44 communiquant avec le conduit transversal 42 et débouchant sur l'ouverture 41b du nez d'arrêt, et des rebords 45 qui sont prévus à l'extrémité des ailes 41a du nez et qui s'appliquent contre les parois latérales 14 et 15 de la canalisation pour rejeter l'eau latéralement. Dans la variante illustrée figure 6, la pièce 4 comprend deux conduits longitudinaux 44.

Enfin sont solidaires de la pièce 4 des lèvres d'étanchéité en élastomère inférieure 50 et supérieure 51, qui sont respectivement situées sur le chant inférieur du nez 41 et sur un rebord externe 43a de la paroi transversale 43. Les lèvres inférieure 50 et supérieure 51 jouent le rôle de joint transversaux d'étanchéité avec la paroi supérieure 12 de l'enveloppe et respectivement avec la face interne 24a des bandeaux supérieurs des demi-coquilles qui recouvrent la pièce 4 par leurs rabats 24b.

Le fonctionnement du dispositif va maintenant être décrit.

Les pièces 4 sont emboîtées dans les canaux transversaux 12b de chaque tronçon d'enveloppe et rivetées à la paroi supérieure 12; le conduit longitudinal 44 d'une pièce débouche sur le canal longitudinal 12a, le conduit transversal 42 débouche au bord des parois latérales 14 et 15, et la lèvre inférieure 50 s'appuie jointivement à la paroi supérieure 12.

Les deux tronçons 10 sont ensuite assemblés grâce aux moyens d'éclissage mécanique 2 montés au niveau des ouvertures 16. On applique d'abord la demi-coquille 20 contre la canalisation, les ergots de positionnement 22b coopérant avec les orifices 17 de la paroi latérale pour une meilleure rigidité, et le bandeau supérieur 24 s'appliquant sur la paroi 12 jointivement à la lèvre supérieure 51 de la pièce 4. On applique de la même manière l'autre demi-coquille 21 à la paroi latérale opposée et on fixe les demi-coquilles à l'aide des boulons 6; le bandeau supérieur 24 s'appuie sur la paroi 12 jointivement à la lèvre supérieure 51 de la pièce 4 et surmonte le bandeau supérieur 24 de la demi-coquille 20 en s'y appliquant au niveau du joint longitudinal 31, lequel est mis en pression par des boulons de serrage coopérant avec les orifices 7 des bandeaux supérieurs 24 et de la paroi 12.

Si de l'eau apparaît dans le canal longitudinal 12a, elle coule dans le conduit longitudinal 44, puis dans le conduit transversal 42 pour s'écouler le long des parois latérales 14 et 15 de l'enveloppe suivant la gorge verticale 22d et la gorge horizontale 22e des demi-coquilles et s'évacuer ainsi en dehors de la pièce d'éclissage; les joints verticaux 30 permettent d'empêcher l'eau de pénétrer dans l'ouverture 16.

## Revendications

1. Canalisation de distribution électrique comprenant une enveloppe métallique (11), à parois supérieure (12), inférieure (13) et latérales (14,15), formée de plusieurs tronçons longitudinaux (10) assemblés entre eux selon un plan de joint (JJ') grâce à des moyens d'éclissage mécanique (2) et logeant des conducteurs électriques reliés entre eux par des moyens d'éclissage électrique, l'enveloppe présentant un canal longitudinal (12a) sur sa paroi supérieure (12), caractérisée en ce que la canalisation comprend une pièce d'étanchéité (4) qui est disposée aux extrémités des tronçons (10) sur la paroi supérieure (12) de l'enveloppe, transversalement au canal longitudinal (12a), et qui présente un nez d'arrêt (41) reposant dans le canal longitudinal (12a) et un conduit transversal (42) d'évacuation d'eau pouvant communiquer avec le canal longitudinal.

2. Canalisation selon la revendication 1, caractérisée en ce que le nez d'arrêt (41) présente une ouverture (41b) débouchant dans le canal longitudinal (12a) de l'enveloppe, et que le conduit transversal (42) communique avec l'ouverture (41b) via au moins un conduit longitudinal (44).

3. Canalisation selon la revendication 1, caractérisée en ce que la pièce d'étanchéité (4) comprend une lèvre d'étanchéité inférieure (50) solidaire du nez d'arrêt (41) et applicable sur la paroi supérieure (12) de l'enveloppe.

4. Canalisation selon la revendication 1, caractérisée en ce que les moyens d'éclissage mécanique (2) consistent en deux demi-coquilles (20,21) présentant chacune une âme (22) et un bandeau supérieur (24), destinés respectivement à s'appliquer par leur face interne contre les parois latérales (14,15) à l'aide de moyens de serrage transversal (6), à s'appliquer sous la paroi inférieure (13) et à surmonter la paroi supérieure (12) de l'enveloppe, les bandeaux supérieurs des deux demi-coquilles étant appliqués l'un contre l'autre à l'aide de moyens longitudinaux d'étanchéité (31).

5. Canalisation selon les revendications 4 et 5, caractérisée en ce que la pièce d'étanchéité (4) comprend une lèvre d'étanchéité supérieure (51) solidaire d'une paroi transversale (43) adjacente au conduit transversal (42) et destinée à s'appliquer sous la face interne du bandeau supérieur (24) et/ou contre la face interne (22a) de l'âme des demi-coquilles (20,21).

6. Canalisation selon la revendication 4, caractérisée en ce que les moyens longitudinaux d'étanchéité (31) consistent en un joint longitudinal et que le bandeau supérieur (24) de chaque demi-coquille comprend des rabats latéraux (24b) recouvrant la pièce d'étanchéité (4).

7. Canalisation selon la revendication 4, caractérisée en ce que l'âme (22) de chaque demi-coquille comprend des gorges verticales (22d) dont l'extrémité supérieure est située au voisinage du conduit transversal (42) de la pièce d'étanchéité et des joints verticaux d'étanchéité (30) disposés au bord des gorges (22d).

8. Canalisation selon la revendication 7, caractérisée en ce que chaque demi-coquille comprend un bandeau inférieur (23) destiné à s'appliquer sous la paroi inférieure (13) de l'enveloppe (11) et, dans l'âme et au-dessus du bandeau inférieur, une gorge horizontale (22e) communiquant avec les gorges verticales (22d).

## Patentansprüche

1. Kabelkanal bestehend aus einem Metallmantel (11) mit oberen (12), unteren (13) und seitlichen (14, 15) Wänden, der aus mehreren Längsabschnitten (10) gebildet wird, die nach einer Teilungsebene (JJ') mit mechanischen Verbindungsmitteln (2) aneinandergefügt werden, und in dem mit elektrischen Verbindungsmitteln miteinander verbundene Stromleiter verlegt werden, wobei der Mantel an seiner oberen Wand (12) eine Längsrinne (12a) aufweist, dadurch gekennzeichnet, daß der Kanal ein Dichtungsteil (4) umfaßt, das an den Enden der Abschnitte (10) an der oberen Wand (12) des Mantels, lotrecht zur Längsrinne (12a) angeordnet ist, und einen in der Längsrinne (12a) ruhenden Stopper (41) aufweist, sowie eine transversale Wasserableitung (42), die mit der Längsrinne in Verbindung stehen kann.

2. Kanal nach Anspruch 1, dadurch gekennzeichnet, daß der Stopper (41) eine Öffnung (41b) aufweist, die in der Längsrinne (12a) des Mantels mündet, und daß die Querleitung (42) über mindestens einer Längsleitung (44) mit der Öffnung (41b) in Verbindung steht.

3. Kanal nach Anspruch 1, dadurch gekennzeichnet, daß das Dichtungsteil (4) eine untere Dichtungslippe (50) am Stopper (41) aufweist, die gegen die obere Wand (12) des Mantels gedrückt wird.

4. Kanal nach Anspruch 1, dadurch gekennzeichnet, daß die mechanischen Verbindungsmittel (2) aus zwei Halbschalen (20, 21) mit jeweils einem Mittelstück (22) und einem oberen Band (24) bestehen, deren jeweilige Innenseite sich anhand von Querspannmitteln (6) gegen die Seitenwände (14, 15), unter der unteren Wand (13) abdrücken und die obere Wand (12) des Mantels überhöhen sollen, wobei die oberen Bänder der beiden Halbschalen anhand von longitudinalen Dichtungsmitteln (31) gegeneinander gedrückt werden.

5. Kanal nach den Ansprüchen 4 und 5, dadurch gekennzeichnet, daß das Dichtungsteil (4) eine obere Dichtungslippe (51) an einer an der Querleitung (42) angrenzenden Querwand (43) umfaßt, die unter die Innenseite des oberen Bands (24) und/oder gegen die Innenseite (22a) des Mittelstücks der Halbschalen (20, 21) gedrückt wird.

6. Kanal nach Anspruch 4, dadurch gekennzeichnet, daß die longitudinalen Dichtungsmittel (31) aus einem Längsdichtring bestehen und daß das obere Band (24) einer jeden Halbschale seitliche Umschläge (24b) aufweist, die das Dichtungsteil (4) überdecken.

7. Kanal nach Anspruch 4, dadurch gekennzeichnet, daß das Mittelstück (22) jeder Halbschale senkrechte Hälse (22d) umfaßt, deren oberes Ende sich in der Nachbarschaft der Querleitung (42) des Dichtungsteils und der am Rand der Hälse (22d) angeordneten, senkrechten Dichtungsringe (30) befindet.

8. Kanal nach Anspruch 7, dadurch gekennzeichnet, daß jede Halbschale ein unteres Band (23) umfaßt, das sich unter der unteren Wand (13) des Mantels (11) abdrückt und, im Mittelstück über dem unteren Band einen waagerechten Hals (22a), der mit den vorstehend genannten senkrechten Hälsen (22d) in Verbindung steht.

## Claims

1. Electrical distribution duct comprising a metal envelope (11), with an upper (12), lower (13) and side (14, 15) walls, formed by several longitudinal sections (10), assembled on a seal plane (JJ') by means of mechanical fish plates (2) and housing electrical conductors which are interlinked by means of electric fish plates, the envelope having a longitudinal groove (12a) on its upper wall (12), characterised in that the duct has a seal (4) fitted on the ends of the sections (10) on the upper wall (12) of the envelope, transversally to the longitudinal groove (12a) and which has a stop tongue (41) which rests in the longitudinal groove (12a) and a transversal water evacuation channel (42) which may be connected to the longitudinal groove.

2. Duct according to claim 1, characterized in that the stop tongue (41) has an opening (41b) which leads into the longitudinal groove (12a) of the envelope, and that the transversal channel (42) is connected to the opening (41b) by at least one longitudinal groove (44).

3. Duct according to claim 1, characterized in that the seal (4) has a lower sealing lip (50) which is attached to the stop tongue (41) that is applied onto the upper wall (12) of the envelope.

4. Duct according to claim 1, characterized in that the mechanical fish plates (2) are made of two half shells (20, 21), each with a rib (22) and an upper strip (24), respectively designed for their inside faces to press against the side walls (14, 15) by means of transversal clamps (6), to be pressed below the lower wall (13) and on top of the upper wall (12) of the envelope, with the upper strips of the two half shells pressed against each other by means of longitudinal sealing devices (31).

5. Duct according to claims 4 and 5, characterized in that the seal (4) has an upper sealing lip (51) which is attached to the transversal wall (43) adjacent to the transversal channel (42) and designed to press under the inside face of the upper strip (24) and/or against the inside face (22a) of the rib of the half shells (20, 21).

6. Duct according to claim 4, characterized in that the longitudinal sealing devices (31) consist of a longitudinal seal and that the upper strip of each half shell has lateral flaps (24b) which cover the seal (4).

7. Duct according to claim 4, characterized in that the rib (22) of each half shell has vertical grooves (22d), the upper edge of which is situated next to the transversal channel (42) of the seal and vertical seals (30) fitted on the edge of the grooves (22d).

8. Duct according to claim 7, characterized in that each half shell has a lower strip (23) designed to press under the lower wall (13) of the envelope (11) and, in the rib and above the lower strip, a horizontal groove (22e) is connected to the vertical grooves (22d).
